# EUROPEAN PATENT APPLICATION

(11) **EP 3 885 401 A1**
(43) Date of publication of application: **29.09.2021**
(21) Application number: 20382230.9
(22) Date of filing: 25.03.2020
(51) Int. Cl.: C08K 3/016, C08K 3/04, C08K 3/22, C08K 3/30, C08K 3/32, C08K 3/34, C08K 5/00, C08K 5/3492, C08K 5/52, C08K 5/521, C08K 9/10, C09D 5/18

(54) **SELF-SENSING FLAME RESISTANT POLYMERIC MATERIALS**

(71) Applicant: Avanzare Innovacion Tencologica S.L., 26370 Navarette (ES)
(72) Inventor: GOMEZ CORDÓN, Julio, 26370 La Rioja (ES); VILLARO ABALOS, Elvira, 26370 La Rioja (ES); OTAÑO JIMENEZ, Luis, 26370 La Rioja (ES); PEREZ MARTÍNEZ, Javier, 26370 La Rioja (ES)
(74) Representative: Balder IP Law, S.L.

(57) **Abstract**

The present invention relates to a method for the detection of fire or a source of heat using a polymeric material, for monitoring the fire resistance of a polymeric material and/or for monitoring the effects of fire and/or heat in the mechanical and/or structural properties of a polymeric material or a substrate coated by a polymeric material wherein the polymeric material comprises a polymer in combination with graphene and/or a graphene material, said method comprising measuring electrical resistance or impedance of the polymeric material, and relates to the use of graphene and/or a graphene material in a polymeric material for such methods and as additives for a polymeric material.

## Description

### TECHNICAL SECTOR

The invention is related to the use of graphene materials in coatings or in polymeric materials to improve the fire retardancy of the substrates and to monitor the fire retardancy or presence of fire based in the modification of the electrical conductivity or resistivity of the materials or coatings.

### BACKGROUND OF THE INVENTION

It is well known that the vast majority of polymeric materials do not have good flame resistance properties. These bad flame resistance properties result in the spread of thousands of fires per year and the loss of human lives. In 2016, 780,000 fires were recorded and the loss of 4,000 human lives as a result.

To avoid these risks, flame retardant materials are used. Halogen compounds, antimony oxides and red phosphorus are by far the most commonly used flame-retardant materials. These flame retardants are very versatile and provide very good protection at low prices and with the best balance between performance, mechanical properties, processability and cost. However, they are very toxic and restricted materials in several countries. In recent years, new halogen-free flame-retardant compounds of lower toxicity and environmentally friendly are appearing. These include inorganic hydroxides, such as Al(OH)₃ and Mg(OH)₂, organic and inorganic phosphates and phosphonates and those derived from melamine.

The use of nanomaterials as flame retardants has also been described: organ modified clays, nanocoatings (Materials Science and Engineering R 84 (2014) 1-20) TiO₂ nanoparticles, silica nanoparticles, double hydroxides, carbon nanotubes The CNTs are presented as an interesting alternative to the use of conventional flame retardants or nano-clays. Its incorporation, with low filler content (<3% by weight) improves the fire resistance of a wide variety of polymers such as EVA, PS, PMMA, PA-6, LDPE and PP (Advanced Functional Materials 2007, 17, 2787- 2791; Polymer 2007,48, 6086-6096; European Polymer Journal 2007, 43, 3222-3235; Polymer 2005, 46, 471-481; Polymer 2004, 45, 4227-4239), graphene materials, both graphene oxide (Polymer Degradation and Stability 152 (2018) 1-9; CN105273727) or silsesquioxanes.

Currently, fire detection systems are based on smoke detectors, which are activated when the fire has produced the combustion of materials and generated smoke. Polymeric materials have poor electrical properties, being in most cases insulating. To improve these properties, conductive charges, such as metal particles, free or supported ionic conductive materials US2018244900 (A1), or carbonaceous materials, such as carbon blacks, carbon nanotubes, graphite or graphene materials, EP2548657 (A1) are usually added. Graphene and graphene materials, except those that come from oxidation processes, such as graphene oxide, have good electrical conductivity which allows the electrical properties of polymeric materials to be improved.

Graphene materials are a family of sheet materials, or two-dimensional, of low thickness, between 1 and 10 layers, as described in the editorial article of Professor Bianco (Carbon 65, 2013, 1-6). Six working principles are established and it provides the necessary nomenclature to systematically define the different graphene materials:
- Graphene sheet or monolayer graphene: Sheet of an atom of thick, hexagonal arrangement where the carbon atoms that compose it show sp² type bonds.
- Graphene microparticle: adapts to the previous definition, and its use is recommended for cases where the lateral size is between 100 nm and 100 µm.
- Bilayer / trilayer graphene: two-dimensional materials composed of 2 or 3 layers.
- Multilayer graphene: material composed of between 2 and approximately 10 layers of graphene.
- Graphene of few layers: material composed of between 2 and 5 layers of graphene.
- Graphene nanoplatelets or graphite nanoplatelets: materials with graphite ordering that have a dimension smaller than 100 nm (it can be the thickness or the lateral size).
- Exfoliated graphite: Material obtained by a partial exfoliation of graphite or graphite intercalation materials (thermal, mechanical or chemical), with a 3D structure (thickness greater than 10 layers).
- Graphene oxide (GO): chemically modified graphene by massive oxidation of the plane; being a single layer material with a high oxygen content. The C / O atomic ratio can be close to 2 (or up to 3).
- Multilayer graphene oxide: this name is proposed in the materials in which there is a regrowth of the sheets or a complete exfoliation; considering a maximum of 10 sheets.
- Graphite oxide: material in which the sheets have been modified and functionalized, increasing the space between them. This material can be partially delaminated to obtain graphene oxide of few layers or fully exfoliated until it reaches graphene oxide. Graphene and graphite oxides are characterized by presenting a diffraction peak of X-ray diffraction different from the rest, (001) compared to (002) of the reduced or pristine ones.
- Reduced graphene oxide (rGO): it is the material obtained after applying reduction processes (they can be thermal, chemical, photochemical treatments, by microwaves or microorganisms.
- Functionalized graphene materials. For this type of decorations or functionalizations it is proposed to include the type of molecule that functionalizes it. For example: reduced graphene oxide microlumen functionalized with aminopropyl silane.

As mentioned, there are other related materials of greater thickness such as graphite oxide, which has more than 10 layers, or so-called graphene or graphite nanoplatelets, which have an average thickness of more than 3.5 nm and therefore more than 10 layers. The definitions can be obtained from ISO/TS 80004-3 "Nanotechnologies - Vocabulary - Part 3: Carbon nano-objects", ISO/TS 80004-13 "Nanotechnologies - Vocabulary-Part 13: Graphene and other two-dimensional materials".

### OBJECT OF INVENTION

The object of the present invention is to improve fire resistance and allow the detection of fire in polymeric materials, such as paints, varnishes or mass materials such as thermoplastic, thermosetting and elastomers, as well as their composite materials, using graphene materials alone or in combination with other flame-retardant materials.

The present invention also allows monitoring the effects of fire and/or heat produce during a fire in the mechanical and/or structural properties of a polymeric material or a substrate coated by a polymeric material.

Accordingly, the present invention relates to a method for the detection of fire or a source of heat using a polymeric material, for monitoring the fire resistance of a polymeric material and/or for monitoring the effects of fire and/or heat in the mechanical and/or structural properties of a polymeric material or a substrate coated by a polymeric material wherein the polymeric material comprises a polymer in combination with graphene and/or a graphene material, said method comprising measuring electrical resistance or impedance of the polymeric material, use of graphene and/or a graphene material in a polymeric material for such methods and as additives for a polymeric material.

The objects of the invention are further specifically defined in the claims and further elucidated here below.

### BRIEF DESCRIPTION OF THE DRAWINGS

Figure 1 shows the Heat Release Rate (HRR) of glass fibber epoxy composite filled with AV-PLAT40 (dotted line) and unfilled one (solid line), of Example 7.
Figure 2 shows the HRR of an epoxy composite filled with a conventional fire retardant material (solid line) and glass fibber epoxy composite with a conventional fire retardant material doped with a graphene material (GRM, dotted line), of Example 6.
Figure 3 shows the difference in electrical resistance (ΔR%) during an UL94 fire test using polyamide specimens with 10% of few layer graphene (AVPLAT7) of Example 1 (composite of example 1.8 (10% AVPLAT7 in PA6)).
Figure 4 shows the evolution of electrical resistance (M Ω) of polypropylene (PP) test coupons of Example 2 (2.14) under 5 fire sequences, 3 sequences of 10 seconds, 1 sequence of 20 seconds and finally one sequence of 30 seconds.
Figure 5 shows variation of resistivity in an epoxy paint according to example 5 during a fire test of 20 min.
Figure 6 shows the variation of resistivity for the formulation of Example 5 with the temperature during a fire test.
Figure 7 shows a RAMAN spectrum for the sample of Example 5, before and after a fire test.
Figure 8 shows a 2D band (2680 cm⁻¹) RAMAN spectrum for the sample of Example 5 showing discrete clusters of reduced graphene oxide (rGO) particles.

### DESCRIPTION

The present invention relates to a method for the detection of fire or a source of heat using a polymeric material, for monitoring the fire resistance of a polymeric material and/or for monitoring the effects of fire and/or heat in the mechanical and/or structural properties of a polymeric material or a substrate coated by a polymeric material. Wherein the polymeric material comprises a polymer in combination with graphene and/or a graphene material, said method comprising:
1. measuring the electrical resistance or impedance of the polymeric material.
2. identifying the presence or absence of a variation on the electrical resistance or impedance of the polymeric material by comparing said measurement with a reference value, wherein the absence of a variation is indicative of
   a. the absence of fire or a source of heat,
   b. no change in the fire resistance of the polymeric material, and/or
   c. no change in the mechanical and/or structural properties of the polymeric
      material caused by fire and/or heat
   wherein the presence of a variation is indicative of
   d. the presence of fire or a source of heat,
   e. a change in the fire resistance of the polymeric material, and/or
   f. a change in the mechanical and/or structural properties of the polymeric material or the material coated by a polymeric material caused by fire and/or heat.

The reference value may be, e.g., an earlier measurement of said electrical resistance or impedance.

The poor fire resistance of polymeric materials, used both for the manufacture of coatings, such as paints, varnishes, or for mass applications in both thermoplastics, elastomers or thermosets, makes it necessary to add flame retardants. These bad flame resistance properties result in the spread of thousands of fires per year and the loss of human lives.

Virtually all additives that are added to polymers as flame retardants do not have good electrical conductivity, which would not allow premature detection of a fire or when it has occurred.

Sensor applications have been proposed in polymers and composites of various mechanical properties using carbon nanotubes, Nanotechnology 2008, 19, 215713, Composites Science and Technology 74 (2013) 85-90, Journal of Nanoscience and Nanotechnology, 2006, 6, 960 -964, and graphene materials, ACS Nano 2014, 8, 8819-8830.

The possibility that the polymeric materials and, e.g., coatings based on them, present resistance to the flame and that the same can be detected, would allow an early detection of fires and also increase their fire resistance.

Accordingly, the present invention relates to improving fire resistance and allow the detection of fire in polymeric materials through the use of graphene materials and materials derived therefrom by a process as described herein.

In particular, the present inventio relates to the use of graphene and/or a graphene material in a polymeric material for the detection of fire or a heat source, for monitoring the fire resistance of the polymeric material and/or for monitoring the effects of fire and/or heat in the mechanical and/or structural properties of the polymeric material or a substrate coated by the polymeric material. Such use is preferably according to a method described herein.

Suitable graphene and/or graphene materials used in a method or uses as described herein may have an average number of layers from 1 to 200, more preferably from 1 to 60 and even more preferably from 1 to 10.

Graphene and/or graphene materials for this invention can be selected from graphene oxide, few layers of graphene oxide, multilayer graphene oxide, reduced graphene oxide, few layers of reduced graphene oxide, multilayer reduced graphene oxide, reduced graphite oxide, functionalized graphene oxide, few layers of functionalized graphene oxide, functionalized multilayer graphene oxide, functionalized graphite oxide, functionalized reduced graphene oxide, few layers of functionalized graphene oxide, functionalized reduced graphene oxide, functionalized reduced graphite oxide, pristine or almost-pristine graphene, few layers of pristine or almost-pristine graphene, pristine or almost pristine multilayer graphene.

The graphene material may be in the form of nanoplatelets of graphene. Such materials may be produced by exfoliation methods such as liquid-phase exfoliation through mechanochemical processes or by electrochemical exfoliation or by intercalation and exfoliation or by ultrasonication, being able to be pristine or functionalized, or combinations thereof.

Graphene and graphene materials have several mechanisms to protect polymers from fire. The first mechanism of action of graphene and/or graphene materials is chemical, releasing molecules, during combustion or when the temperature rises, which decreases the concentration of combustible gases, this effect is presented for example by graphene oxide or other graphene materials that have intercalated molecules. Another mechanism is based on a barrier effect for both oxygen and combustible materials from thermal degradation of polymeric materials. It also favors the appearance of a layer of carbonized material, known as char, which is a barrier to oxygen and combustible materials, but also re-radiation part of the heat produced by the flames. However, the lateral size and thickness of the graphene materials are key in the formation of layers of compact carbonized material, for example, graphene materials of great side size or very high percentages of the graphene material do not allow to obtain compact layers, losing flame resistance.

On the other hand, graphene and graphene materials also allow to improve the mechanical properties and change the rheology of polymers in the molten state, which prevents the dripping of incandescent particles, responsible for the propagation of a large number of fires. Finally, it should be noted that the improvement in thermal conductivity due to the presence of graphene materials, allows to dissipate part of the heat generated by the flame, and therefore by cooling it.

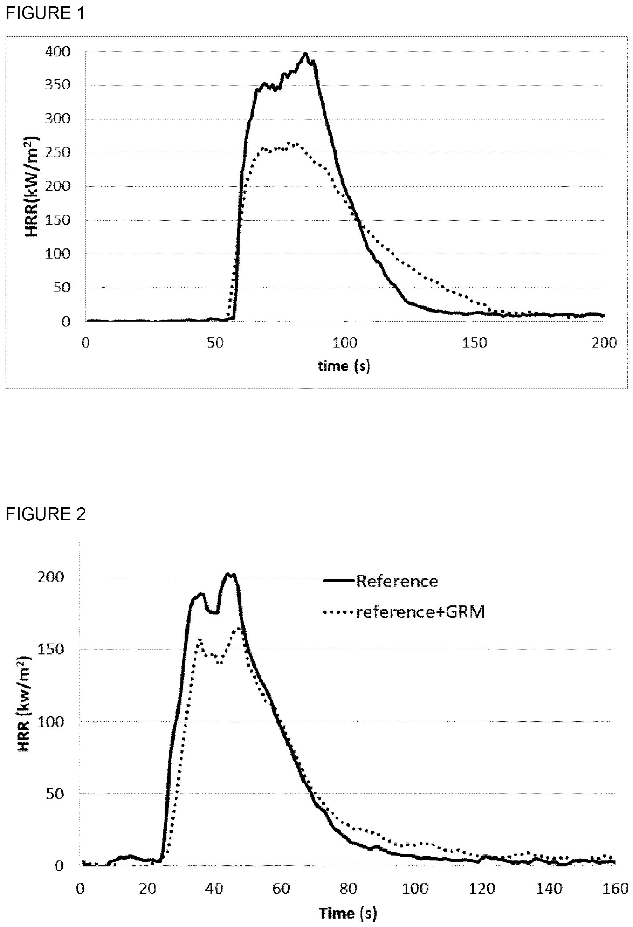

Graphene and graphene materials allow to reduce the amount of heat in measurements in calorimetric cone for different composites. Figure 1 shows the Heat Release Rate (HRR) of glass fiber epoxy composite filled with AV-PLAT40 (dotted line) and unfilled one (solid line),of Example 7. It can be seen that the use of 0.5%wt of a graphene (in this case an almost pristine multilayer graphene, such as, AV-PLAT40), produces the reduction of the peak of Heat release from 400 kW/m2 to 250 kW/m2 (Figure 1) in a glass fiber reinforced epoxy composite.

Further, the present invention relates to the use of graphene and/or graphene materials in combination with other flame-retardant materials. It has been found that due to the barrier effect and the decrease in dripping and decreasing the amount of combustible materials, graphene and/or graphene materials have a synergistic effect with other flame-retardants. Thus, graphene and/or graphene materials can be combined with other flame retardant materials.

Thus, in a method as described herein the polymeric material may comprise, in addition to the graphene and/or a graphene material the polymeric material further comprises a flame retardant.

A flame retardant may be selected from halogenated compounds, antimony oxides, red phosphorus, inorganic hydroxides, boehmite, Al(OH)₃, Mg(OH)₂, metal double hydroxides, organic and inorganic phosphates, phosphonates, phosphinates and polyphosphates, such as ammonium polyphosphate, tryethylphosphate, ammonium diphosphate, NH₄H₂PO₄, triphenylphosphate, tris-2-ethylhexylphosphate, urea phosphate, aluminium phosphinate, aluminium diethylphosphinate; melamine, melamine derivatives such as melamine phosphate, melamine polyphosphate, melamine cyanurate; diacyandiamide, sulphates and sulphonates such as ammonium sulphate, H(NH₄)SO₄, melamine methanesulfonate, ammonium thiosulphate; piperazine derivatives such as piperazine phosphate, piperazine diphosphate, piperazine polyphosphate; nano-clays, TiO₂, TiO₂ nanoparticles, ZnO, ZnO nanoparticles, zinc borate, zinc phosphate, silica nanoparticles, carbon nanotubes (CNTs), graphite, and expandable graphite and silsesquioxanes or mixtures of some of these fire retardant materials. Said flame retardant can be also ensapsulated to, e.g., improve its thermal or chemical stability, improving its dispersibility.

Depending on the polymer selected, inorganic (such as SiO₂, CaCO₃, clays and nanoclays) or organic capsules may be preferred for the encapsulation. Also the capsules can be functionalised with organic molecules or by self-assembly to improve the dispersion and compatibilization. Usually the inorganic capsules are used for the improvement of the thermal stability of the fire retardant material inside the capsule.

The flame retardant may be preferably selected from triethylphosphate, Mg(OH)₂, ammonium polyphosphate, ammonium sulphate, piperazine phosphate, Al(OH)₃, NH₄H₂PO₄, tributoxyethylphosphate, melamine polyphosphate, melamine cyanurate, antimuonium oxide and encapsulated ammonium sulphate.

The weight ratio of graphene and/or the graphene material with respect to the flame retardant may be from 1:400 to 2:3.

Thus, for example, in the present invention the combination of the graphene materials allows to reduce the amount of heat in measurements in calorimetric cone. Figure 2 compare the HRR of an epoxy glass fiber reinforced composite filled with a conventional fire retardant material (solid line) and glass fiber epoxy composite with a conventional fire retardant material doped with a graphene material (GRM, dotted line), of Example 6. As can be observed, the addition of a small amount of graphene to flame retardants such as polyphosphates (Example 6) allows a notable reduction in the peak of the heat release rate, over 25% with small amount of one graphene material, also reducing the ignition start time.

Accordingly, one aspect of the present invention relates to a method for conferring fire resistance properties to a polymeric material, comprising preparing the polymeric material described herein.

In particular, the present invention further relates to an additive for improving the fire resistance of a polymeric material, for the detection of fire or a heat source using a polymeric material, for monitoring the fire resistance of a polymeric material and/or for monitoring the effects of fire and/or heat in the mechanical and/or structural properties of a polymeric material or a substrate coated by the polymeric material, wherein said additive comprises a combination of a
i) graphene and/or a graphene material and
ii) a flame retardant.

The graphene and/or a graphene material (i), the flame retardant (ii) and the weight ratio fo i) to ii) may preferably be as for the method described herein (above).

The present invention also relates to a polymeric material comprising a polymer and an additive as described herein, wherein the polymer preferably is as also defined here below for a method as described herein.

The polymers to which graphene materials can be added alone or in combination with other flame retardants proposed in this invention to improve fire resistance and to detect their fire behavior in a method as described herein may be selected from: polyolefins of any type such as polyethylene, polypropylene, polybutylene, copolymers of olefins with different monomers; ethylene vinyl acetate (EVA) copolymers, copolymers of olefins with acrylates or methacrylates such as ethylene-butyl methacrylate; polystyrenes such as as high-impact polystyrene (HIPS), vinyl polymers such as polyvinyl chloride (PVC); polyethylene terephthalate (PET);, polymethacrylates, polyacrylates, polyamides, polylactide (PLA), polyviny(lidene difluoride (PVDF), polytetrafluoroethylene (PTFE, Teflon), polycarbonates, acrylonitrile butadiene styrene (ABS), acrylonitrile butadiene styrene /polycarbonate (ABS-PC); polyether ketone ketone (PEKK), polyether ether ketone (PEEK); polyphenylene sulfide (PPS), polyurethanes, chloroprene rubber, natural rubber (NR), polyisoprene, styrene-butadiene rubber (SBR), acrylonitrile butadiene rubber (NBR), hydrogenated acrylonitrilo-butadiene rubber (HNBR), carboxylated acrylonitrile-butadiene rubber (XNBR), ethylene-propylene-diene rubber (EPDM) the diene preferably being norbornadiene, dicyclopentadiene, 1,4-hexadiene, piperylene or 5-ethylidene-2-norbornene, polybutadiene, polybutylene, polystyrene butadiene styrene (SBS), ethylene polystyrene butadiene styrene (SEBS), block copolymer elastomers consisting of two or more hard segments of a polyester or a polyamide and two or more soft segments of polyester or polyether such as PEBAX or Hytrel, silicone elastomers, thermoplastic elastomeric polyurethanes, thermoplastic elastomeric polyureas, acrylic rubbers (ACM), fluorinated rubbers (FKM), epichlorohydrin rubbers (ECO), polysulfide rubbers such as Thiokol; ionomers, latex, epoxy resins, polyester resins, unsaturated polyester resins, epoxy vinyl ester, polyamide-imide, polyester-imide, gel coats such as unsaturated polyester gel coats, acrylic gel coats or polyurethane gel coats; polyurethane resins, polyurea resins, urea-formaldehyde, melamine-formaldehyde, phenol-formaldehyde, acrylic resins mixtures or mixtures of these polymers.

In several embodiments the polymer may be selected from polyamide, polypropylene, polyurethane resins, acrylonitrile butadiene rubber (NBR), epoxy resins, unsaturated polyester resins, polyethylene, polystyrene, acrylonitrile butadiene styrene (ABS), ethylene vinyl acetate (EVA), polyvinyl chloride (PVC), styrene-butadiene rubber (SBR).

A polymeric material as described herein may be in the form of a paint; a coating such as a coating on a metal, in particular on a metal structure; an adhesive; electrical and electronic component such as a cables; an automotive component; an aerospace component; a material for the building industry; a textile; or a composite with wood, paper and/or textiles.

Other particular examples of polymers are the ones described in, e.g., example 4 and 8, such as NBR or polyurethane, or in example 14, which shows the synergetic effect of few layers graphene to reduce the use of Fire Retardant materials in a bend or mixture of EVA/Polyethylene for their use in cables.

Graphene and/or graphene materials may be present in a polymeric material as described herein in an amount of from 0.01% to 70% by weight, preferably from 0.05% to 60% by weight and more preferably from 0.1% to 25% by weight, based on the total weight of the polymeric material.

Depending on the dispersion technique, quantity used should be lower. For example, using a 3 roll mill (calander) it is possible to reduce the amount of graphene materials used.

When the concentration of graphene material exceeds a limit, there is an insulator-to-conductor transition, observed also for other carbon materials, (see for example: Ultra-low electrical percolation threshold in carbon-nanotube-epoxy composites. .K.W.Sandler, J.E.Kirk, I.A.Kinloch.M.S.P.Shaffer, A.H.Windle. Polymer 2003, 44, 5893-5899 ttps://doi.org/10.1016/S0032-3861(03)00539-1). This concentration can be also determined by the use of Electrochemical impedance spectroscopy, by the minimum concentration of the filler that shows a frequency independent conductivity. Usually this limit is just below the percolation threshold, and the polymer composites filled with graphene materials have electrical conductivity and the same can be monitored by measuring the variations in their electrical resistance.

Measuring the electrical resistance or impedance of the polymeric material allows the detection of fire or a source of heat using a polymeric material, monitoring the fire resistance of a polymeric material and/or monitoring the effects of fire and/or heat in the mechanical and/or structural properties of the polymeric material or a substrate coated by the polymeric material, by identifying the presence or absence of a variation on the electrical resistance or impedance of the polymeric material by comparing said measurement with a reference value, that is the value of resistance or impedance in absence of fire or a source of heat or the value when the measurement has started or may be an earlier measurement of said electrical resistance or impedance.

In particular the absence of a variation is indicative of
▪ the absence of fire or a source of heat,
▪ no change in the fire resistance of the polymeric material, and/or ▪
no change in the mechanical and/or structural properties of the polymeric material caused by fire and/or heat.

The presence of a variation is indicative of
▪ the presence of fire or a source of heat,
▪ a change in the fire resistance of the polymeric material, and/or
▪ a change in the mechanical and/or structural properties of the polymeric material or the material coated by a polymeric material caused by fire and/or heat.

Such variation may be of at least 5%. For instance, a 5% of variation in the electrical resistance or impedance of the polymeric material, between the reference values and the values measured is indicative of a process related with the presence of fire.

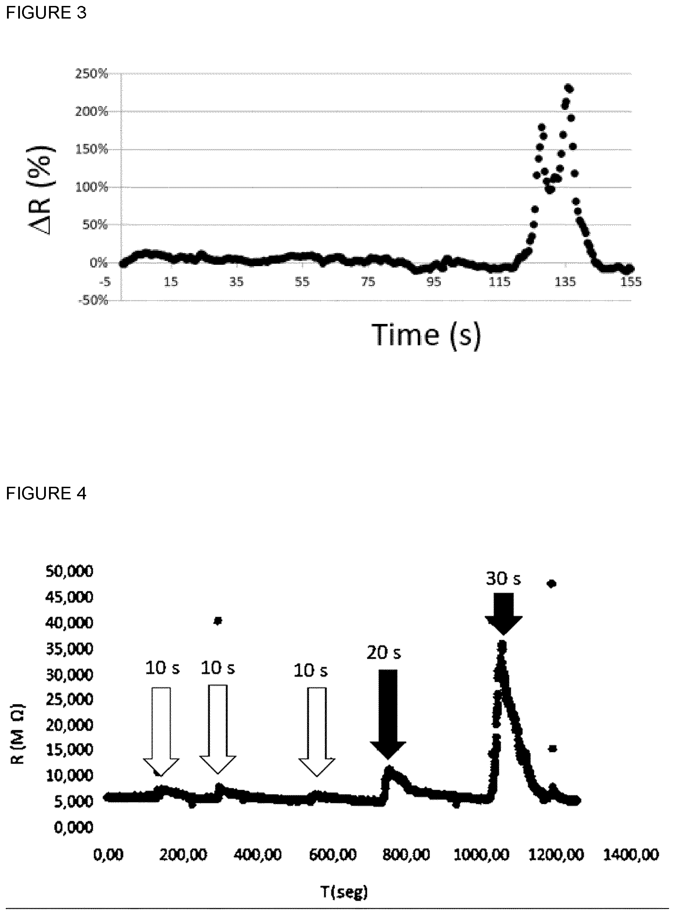

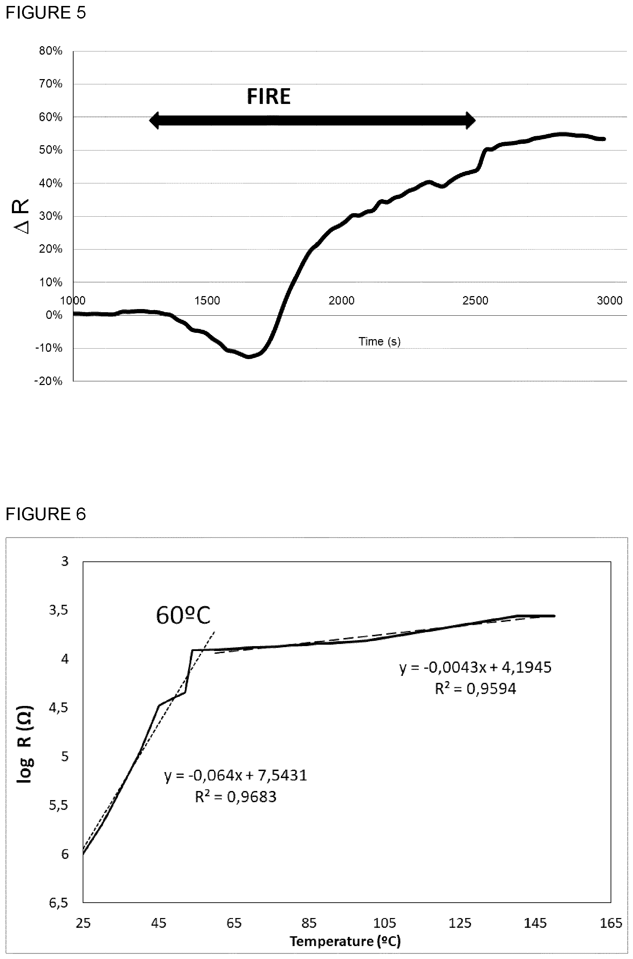

In several embodiments the variation of resistance may be measured in continue and estimated the difference in electrical resistance (ΔR%) that represent ΔR (%) = (Rₜ-R₀)*100/R_{0,} where Rₜ is the resistance in a determining time and R₀ is the initial value of resistance (or reference value). In the absence of fire or a source of heat, the measurement of the resistance in a material is stable, as can be observed in Figures 3, 4 and 5. Thus, for example, in Figure 5, below 1% of variation of R is observed 20 minutes before the flame.

The effect of fire in the electrical Resistance can be observed in Example 1 for Polyamide 6 and using graphene materials as the only flame-retardant materials. At moderate percentages, flame resistance is observed even in the highest classification (V0) in the UL94 test, but as the concentration of these increases, these properties are lost. The electrical conductivity of the same composites has also been measured and only from 7% can it be measured. As can be seen in Figure 3 that represents the difference in electrical resistance (ΔR%) during an UL94 fire test using specimens from the PA6-10% AVPLAT7 composite of Example 1 from example 1.8 (10% AVPLAT7 in PA6). Flame starts at 120 s and a drastically increase in resistivity over 200% is observed. When applying flame the electrical resistance decreases from 23 MOhm to 7.8 MOhm, after 10 seconds the flame is removed (self-extinguishing occurs and there is no dripping), and the resistance increases to 11 MOhm, the specimen continues to burn until self-extinguishing, without dripping, reducing the resistance to 6.5 MOhm. Once the flame is extinguished, the resistance increases until the original is recovered.

Figure 4 shows the evolution of resistivity under 5 fire sequences, 3 of 10 seconds, 1 of 20 seconds and finally one of 30 seconds the behavior of PP test coupons of example 2.14, subjected to a fire test, for which 2 electrodes have been attached to the side edges thereof. During the 3 first fire test, there is an increase of resistivity up to 30%, self-extinguish has been observed and a recovery in the initial resistivity (Figure 4). After 20 s in the flame, the test sample continue with flame for 2 second and then was extinguished. The monitor of resistivity shows a 100% of increase in resistivity and that it takes approximately 120 seconds to recover the initial values of resistivity. Finally, after 30 seconds in the flame, the sample continue burning for 5 seconds after the removal of the Bunsen burner. On the other hand, up to 500% of increase in resistivity is observed. The sample takes approximately 100 s to recover the initial resistivity.

This effect is also observed for thermostable materials such as epoxy resins, polyester, acrylic, polyurethane, among others.

Figure 5 shows variation of resistivity in an epoxy paint according to example 5 during a fire test of 20 min. It is observed that when the flame occurs there is a decrease of resistivity and after a short period of time a high increase in resistivity is observed.

The variation of resistivity with temperature was measured to understand the effect of the temperature and the temperature under flame. Figure 6 shows the variation of resistivity for the formulation of Example 5 with temperature during a fire test. At temperatures lower than 60°C there is a drastically increase in resistivity, however at higher temperatures, less thermal activation is observed. Based on this observation it is possible to attribute the initial decrease in resistivity to an increase in temperature, however the drastically increase in resistance is attribute to the non thermal activation.

An increase in the conductivity, and therefore decrease of the resistance, can be associated with the creation of the layer of carbonized material or by a thermal reduction of graphene oxide or reduced graphene oxide. It is well known that the decrease of the oxygen content of the reduced graphene oxide (rGO) and other graphene materials is associated with an increase in the intrinsic electrical conductivity of the rGO or graphene material (see for example Figure 5 in "Tailoring the Oxygen Content of Graphite and Reduced Graphene Oxide for Specific Applications" Scientific Reports, 2016, 6:21715. DOI: 10.1038/srep21715).

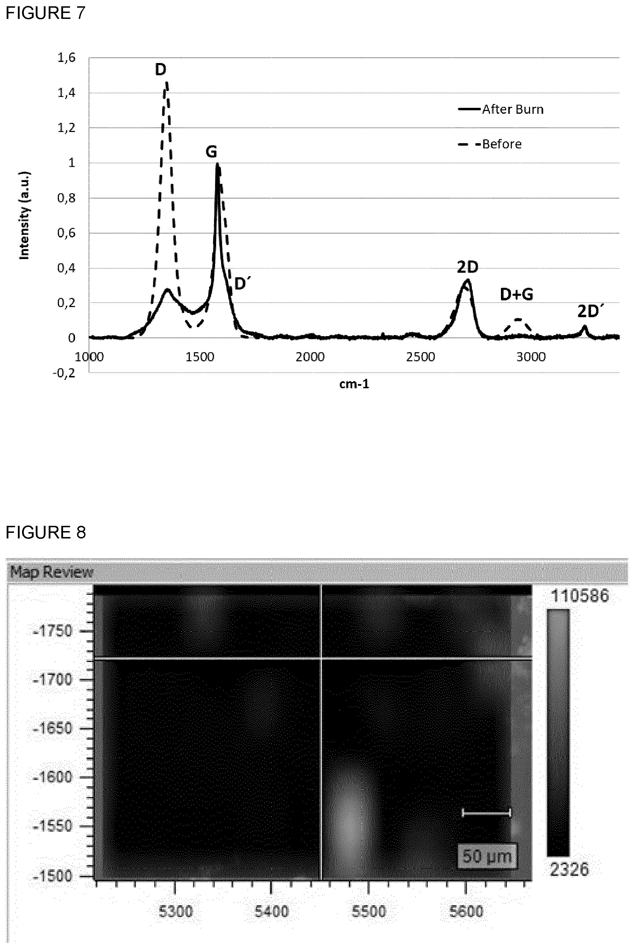

As observed in the RAMAN spectrum represented in Figure 7 for the sample from example 5, before and after the fire test; there is a graphitization process at rGO, with a drastic reduction of peak D, the better definition of D' and a significant decrease in the FWHM (Full Width at Half Maximum) of G band. Also, other bands such as D+G have disappeared. This fact can be associated with a reduction process. The thermal reduction process, due to the temperature of the fire, would be expected to decrease the intrinsic resistivity of the rGO, as commented before, and also to reduce the resistivity of the polymeric material, this is contrary to what we observed. For that reason, we monitored 2D band (2680 cm⁻¹) in RAMAN (Figure 8), showing discrete clusters of rGO particles (Higher intensity of 2D band, brighter in the spectrum.) after a burning process and deterioration of the protective layer. This fact may difficult the percolation network and may be responsible of the increase in resistivity observed.

Based on the thermal activation observed in figure 6 it is also possible to use the formulation to monitor change in temperature of a polymeric material as described herein, e.g. the composites and formulations used in this invention. The use of electrical resistance or impedance measurements allows to monitor the variation in in temperature based on the use of graphene materials.

The process of adding graphene and/or a graphene material or an additive comprising a graphene and/or a graphene material and a flame retardant as described herein (also referred to herein as the additive material) to a polymer includes several possibilities: mixture of solid powders, which can be obtained by mixing the material of this invention with polymer powders of size between 10 nm and 10 mm by convective movement, mixed by diffusion or mixed by shear. Mixing by convective motion consists in the inversion of the entire powder bed, in the case of flip blenders or it can be produced by dragging by means of a propeller, by means of an endless screw or other techniques. Diffusion mixing can be done by applying vibratory motion to the powders. Shear mixing can be done during the grinding of the organic polymer, to which the material of this invention is added. These processes are known in the state of the art and are carried out by loads or in continuous. Subsequently, the mixture of solids obtained can be used for molding or they can be extruded by melting or cold to obtain polymer pellets.

Mixing may comprise a step wherein the additive material may be added to a molten solid comprising among others: the inclusion of the additive material in the organic polymer directly by melting the polymer and mixing, referred to in the state of the art as extrusion or melt mixing. The polymer can be melted by heating in a single screw, double screw, planetary extruder or with an internal mixer. The inclusion of an additive material of this invention in the organic polymer by the addition of an additive material in the form of a previous mixture thereof with the same polymer or with other polymers, known in the state of the art as the addition of a concentrate or masterbatch. Melting and final mixing can be done by heating in a single screw, double screw, planetary extruder or with internal mixer.

Mixing may comprise a step in which the additive material is added in solid form to a monomer, dispersed by stirring, diffusion, shear, vibration, ultrasound or others and simultaneously or subsequently the monomer is polymerized in situ.

Mixing may comprise a step in which the additive material added in solid form to a solid polymer that has previously been dissolved in a solvent. The mixture of solid and liquid may be dispersed by stirring, diffusion, shear, vibration, ultrasound or others and simultaneously or subsequently the solvent is removed by vacuum, distillation or any other method applicable in the state of the art for mixing inorganic or metal fillers.

Mixing an additive material of this invention or a concentrate or a masterbatch thereof with the solid polymer may be performed in a mixer closed by Bambury, Sigma or similar charges, known in the state of the art for the mixing of inorganic or metallic fillers.

Mixing an additive material of this invention or a concentrate or a masterbatch thereof, with the organic polymer may be performed in a roller mill or calender, known in the state of the art for mixing inorganic or metallic fillers.

Mixing an additive material of this invention or a concentrate or masterbatch thereof with an organic resin of one or two components such as unsaturated polyesters, vinyl ester epoxy, gel coats of these polymers, epoxy resins, polyurethane resins, polyurea resins, urea-formaldehyde, melamine-formaldehyde, phenol-formaldehyde in which its components are liquid or pasty may be performed by any method of mixing or dispersion such as agitation, vibration, ultrasound or others.

Any other state-of-the-art method that allows a solid material to be added to a polymer, be it solid or liquid, may also be used.

Once an additive material of this invention has been added to the polymer, the polymeric material may be shaped into a final object of manufacture using any state-of-the-art technique to obtain objects from organic polymers such as injection, extrusion, coextrusion, fiber manufacturing, rotational molding, pressing, pressing of hot plates, open molding, casting, sintering, film, fiber manufacturing, SMC, BMC, laminate, painted, lacquered, varnished, sprayed or other methods known in the state of the art.

The final polymeric materials may contain those other additives necessary in their manufacture of the final object of manufacture such as antioxidants, UV protectors, plasticizers, antistatic, electrical conductors, antiblocking agents, accelerators, catalysts, thermal stabilizers, flame retardants, mineral or organic fillers or other additives, depending on the properties which are required of the final polymer, which can be added, before during or after mixing with the graphene materials.

In addition, both thermoplastic and thermosetting plastics or elastomers may contain varying amounts of different pigments and dyes to color the plastic or elastomer, which may be added, before during or after mixing with the additive material as described herein that grants the detection property.

In order to improve the mechanical and strength properties of the proposed final polymers, coupling agents such as polyethylene-maleic, polypropylene-maleic, polyethylene-acrylic acid and / or other polymers known in the state of technique to improve the dispersion of solid charges in plastics or generate bonds between the solid charge and the polymer.

The graphene materials used to confer the detection properties can be mixed or bound to any of the other additives, fillers or components that the polymer will carry, prior to mixing with the polymer.

### EXAMPLES

Several polymeric materials with different types of additives were prepared and subjected to the UL94 test (the Standard for Safety of Flammability of Plastic Materials for Parts in Devices and Appliances testing, which is a plastics flammability standard released by Underwriters Laboratories of the United States). The results of the test are indicated as NC, V2, V1 or V0.
- NC: not classified. Those for which a rating cannot be assigned. Burning does not stop within 30 seconds.
- V2: burning stops within 30 seconds on a vertical specimen; drips of flaming particles are allowed.
- V1: burning stops within 30 seconds on a vertical specimen; drips of particles allowed as long as they are not inflamed.
- V0: burning stops within 10 seconds on a vertical specimen; drips of particles allowed as long as they are not inflamed.

Further, the electrical resistance of the polymeric materials subjected to the UL94 test was measured by Electrical resistance, or impedance using 2 or 4 electrodes mode and expressed in Resistance (Ω) or Conductivity (S/m) in the tables below.

### Example 1:

It is mixed in a molten state, the processing temperatures are Z1 170°C, Z2 220°C, Z3 220°C, Z4 230°C. using a Rondol 10 mm double screw counter-rotating extruder from LD20, polyamide 6 Ultramid B3K from BASF and the few layer graphene (AV PLAT-7) will be advanced at different weight percentages between 1% and 15%.

A filament is obtained which is cut with a granulator and the granules are dried for 24 hours at 80 ° C and subsequently injected in specimens of dimensions and tempered according to UL94 and thicknesses of 1.6 and 3.2 mm.

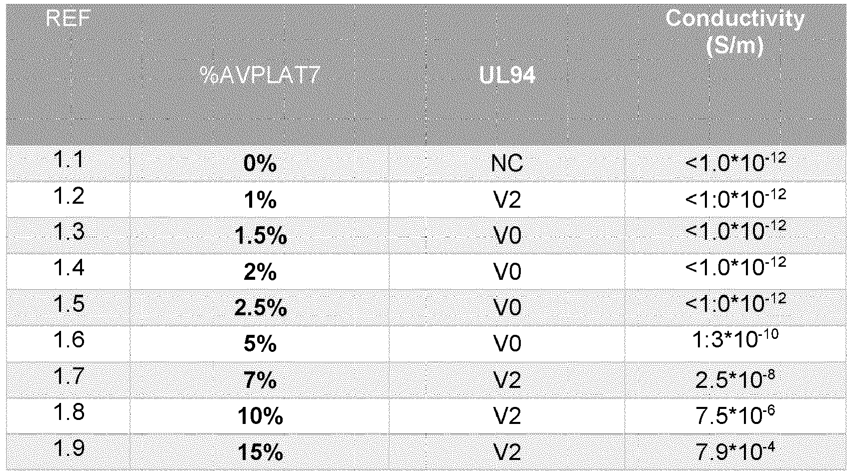

### Example 2:

It is mixed in a molten state, the processing temperatures are Z1 170°C, Z2 180°C, Z3 190°C, Z4 200°C. by means of a double-screw Rondol 10 mm counter-rotary extruder of LD20, polypropylene (PP), flame retardants and char generators or components that prevent dripping, different graphene materials (GRM) at different weight percentages as indicated in the table below.

GRM tested include: AVPLAT7 (few layer graphene), AVPLAT40 (multilayer graphene), AVPLAT2 (few layers graphene), AVPLAT70 (multilayer graphene), Av-40-3-2,5 (multilayer reduced graphene oxide), Av-70-1-2,5 (few layers of reduced graphene oxide), graphene oxide used was GOx-40, all commercially available from AVANZARE. A filament is obtained which is cut with a granulator and the granules are dried and subsequently injected in specimens of dimensions and tempered according to UL94 and thicknesses of 1.6 and 3.2 mm.

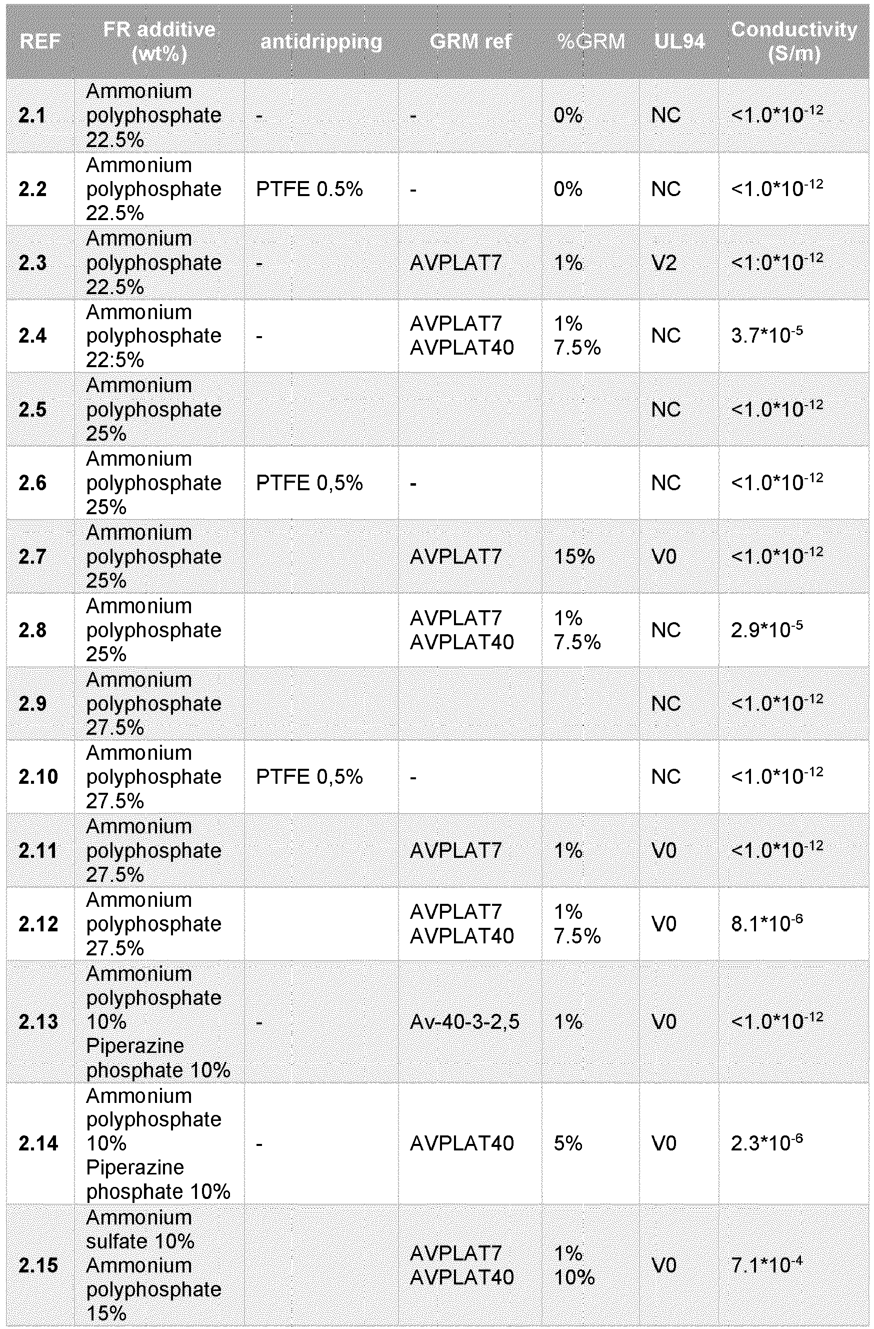

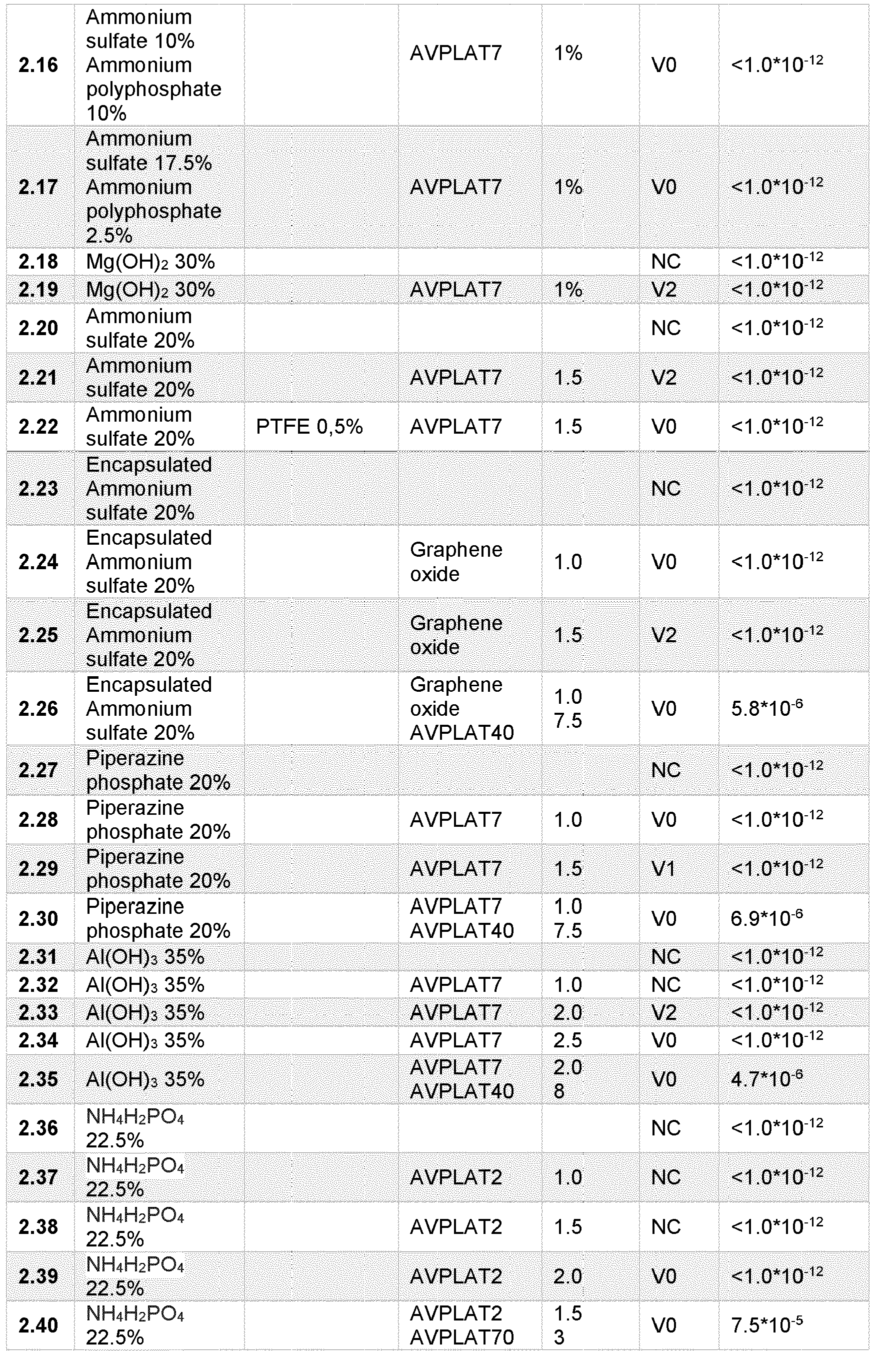

### Example 3:

13% of triethylphosphate and 2% of Graphene AV-PLAT7 was added over polyol. Polyol has reacted with isocyanate and create the foam. Foam was tested under UL94 reach a V0 classification.

### Example 4:

6% of triethylphosphate and 1,5% of AV-PLAT2 was added to acrylonitrile butadiene rubber (NBR) formulation using a Bambury mixer. The composite was polymerized. The rubber was tested under UL94 reach V0 classification.

### Example 5:

In an epoxy paint and 0,45%wt of rGO, av-70-1-2,5, classed as few layers reduced graphene oxide were mixed with a DISPERMAT high shear mixer using a cowless helix. Steel beams were painted and tested under fire and compared with reference paint.

### Example 6:

6.1: Epoxy resin from Robnor with hardener HY1300, 5%wt of ammonium polyphosphate was added and mixed at 1000 rpms for 15 minutes.

6.2: Epoxy resin from Robnor with hardener HY1300, 5%wt of ammonium polyphosphate and 1%wt of AV-PLAT-7 were added and mixed at 1000 rpms for 15 minutes.

### Example 7:

Example 7.1: 12 plies (-45/+45) of E-glass fibber were casted by liquid resin infusion system with an epoxy resin from Robnor with hardener HY1300. The composite was cured at room temperature for 24 h.

### Example 7.2

0.5%wt of of AV-PLAT-40 is dispersed in an epoxy resin from Robnor at 1000 rpms for 15 minutes, after the agitation, hardener is added and agitated for 5 minutes. After agitation, the mix was degassed for 15 min under vacuum.

12 plies (-45/+45) of E-glass fibber were casted by liquid resin infusion system with the mix prepared in example 7.2. The composite was cured at room temperature for 24 h.

Specimens were cut for cone calorimeter fire test

### Example 8:

8,5% of triethylphosphate and 1,5% of AV-PLAT7 was added to unsaturated polyester resins polymerized with the catalyst. The sample was tested 60 seconds under Bunsen fire and the composite self-extinguish. Reference unsaturated polyester resins polymerized with the catalyzer completely burned after 60 seconds under Bunsen fire.

### Example 9:

9.1: 18% triethylphosphate was added over polyol. Polyol has reacted with isocyanate and create the foam. Foam was tested under UL94 reach a NC classification

9.2: 15% triethylphosphate, and 2% AV-PLAT7 was added over polyol. Polyol has reacted with isocyanate and create the foam. Foam was tested under UL94 reach a V0 classification.

### Example 10:

10.1: 20% trisbuthoxyethylphosphate was added over polyol. Polyol has reacted with isocyanate and create the polyurethane foam. Foam was tested under UL94 reach a NC classification.

10.2: 20% trisbuthoxyethylphosphate, and 2% AV-PLAT7 was added over polyol. Polyol has reacted with isocyanate and create the PU foam. Foam was tested under UL94 reach a V0 classification.

### Example 11:

It is mixed in a molten state, the processing temperatures are Z1 170°C, Z2 220°C, Z3 220°C, Z4 230°C. using a Rondol 10 mm double screw counter-rotating extruder from LD20 polyamide 6 Ultramid B3K from BASF and the additives listed below.

The filament is cut with a granulator and the granules are dried for 24 hours at 80 ° C and subsequently injected in specimens of dimensions and tempered according to UL94 and thicknesses of 1.6 and 3.2 mm

11.1: 22.5% melamine cyanurate. Specimens were tested under UL94 reach a NC classification

11.2: 22.5% melamine cyanurate and 1.5% of AV-PLAT2. Specimens were tested under UL94 reach a V0 classification.

### Example 12:

It is mixed in a molten state, the processing temperatures are Z1 170°C, Z2 220°C, Z3 220°C, Z4 230°C. using a Rondol 10 mm double screw counter-rotating extruder from LD20 polyamide 6 Ultramid B3K from BASF and the additives listed below.

The filament is cut with a granulator and the granules are dried for 24 hours at 80 ° C and subsequently injected in specimens of dimensions and tempered according to UL94 and thicknesses of 1.6 and 3.2 mm

12.1: 21% melamine polyphosphate. Specimens were tested under UL94 reach a V2 classification

12.2: 21% melamine polyphosphate and 1,5% of AV-PLAT2. Specimens were tested under UL94 reach a V0 classification.

### Example 13:

It is mixed in a molten state, the processing temperatures are Z1 170°C, Z2 180°C, Z3 190°C, Z4 195°C. using a Rondol 10 mm double screw counter-rotating extruder from LD20 ABS and the additives listed below.

The filament is cut with a granulator and the granules are dried for 24 hours at 80 ° C and subsequently injected in specimens of dimensions and tempered according to UL94 and thicknesses of 1.6 and 3.2 mm

13.1: 15% ammonium polyphosphate and 5% montmorillonite. Specimens were tested under UL94 reach a NC classification and burn

13.2: 15% ammonium polyphosphate, 5% montmorillonite. and 1.25% of AV-PLAT7. Specimens were tested under UL94 reach a V0 classification.

### Example 14:

It is mixed in a molten state, different formulations for their use in cable.

14.1 28.5% EVA copo 18%, and 7.2% of MAH (maleic anhydride) grafted LLDPE and magnesium hydroxide 64.3%

14.2 28.5% EVA copo 18%, and 7.2% of MAH grafted LLDPE, magnesium hydroxide 40% and 24.3 of CaCO₃

14.3 28,5% EVA copo 18%, and 7.2% of MAH grafted LLDPE, magnesium hydroxide 40%, 21.3 of CaCO₃ and 3% of AV-PLAT7

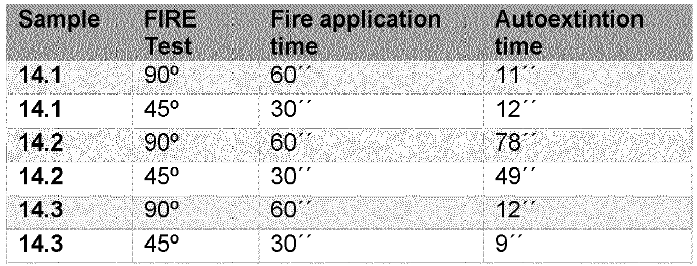

### Example 15:

It is mixed in a molten state High Impact Polystyrene (HIPS), for their application in electronic components such as home appliances, such as a refrigerator.

15.1 HIPS + 20% of ammonium polyphosphate. Under UL94, fail, with NC category 15.2 HIPS + 20% of ammonium polyphosphate+ 1.5% AVPLAT7. Under UL94, V0

### Example 16:

16.1 Styrene butadiene rubber (SBR) is mixed with 12%wt of ammonium polyphosphate. Samples has been prepared and tested under UL94. NC classification has been obtained.

16.2 Styrene butadiene rubber (SBR) is mixed with 12%wt of ammonium polyphosphate and 1.0%wt of AVPLAT2. Samples has been prepared and tested under UL94. V0 classification has been obtained.

16.3 Styrene butadiene rubber (SBR) is mixed with 12%wt of ammonium polyphosphate and 1.0%wt of AVPLAT2 and 2.5%wt AVPLAT70. Samples has been prepared and tested under UL94. V0 classification has been obtained. Resistivity has been measured obtaining 3.6 KOhm/sq

### Example 16:

16.1 Styrene butadiene rubber (SBR) is mixed with 12%wt of ammonium polyphosphate. Samples has been prepared and tested under UL94. NC classification has been obtained.

16.2 Styrene butadiene rubber (SBR) is mixed with 12%wt of ammonium polyphosphate and 1.0%wt of AVPLAT2. Samples has been prepared and tested under UL94. V0 classification has been obtained.

### Example 17:

17.1 Polyvinyl chloride (PVC) is mixed with 3%wt of antimony oxide. Samples has been prepared and tested under UL94. NC classification has been obtained.

17.2 Polyvinyl chloride (PVC) is mixed with 3%wt of antimony oxide and 1.75%wt of AVPLAT7. Samples has been prepared and tested under UL94. V0 classification has been obtained.

"The project leading to this application has received funding from the European Union's Horizon 2020 research and innovation program under grant agreement No 649953."

## Claims

1. A method for the detection of fire or a source of heat using a polymeric material, for monitoring the fire resistance of a polymeric material and/or for monitoring the effects of fire and/or heat in the mechanical and/or structural properties of a polymeric material or a substrate coated by a polymeric material wherein the polymeric material comprises a polymer in combination with graphene and/or a graphene material, said method comprising
- measuring the electrical resistance or impedance of the polymeric material
- identifying the presence or absence of a variation on the electrical resistance or impedance of the polymeric material by comparing said measurement with a reference value. The reference value is an earlier measurement of said property
∘ wherein the absence of a variation is indicative of
▪ the absence of fire or a source of heat,
▪ no change in the fire resistance of the polymeric material, and/or
▪ no change in the mechanical and/or structural properties of the polymeric material caused by fire and/or heat, and
∘ wherein the presence of a variation is indicative of
▪ the presence of fire or a source of heat,
▪ a change in the fire resistance of the polymeric material, and/or
▪ a change in the mechanical and/or structural properties of the polymeric material or the material coated by a polymeric material caused by fire and/or heat.

2. The method according to claim 1, wherein the graphene and/or graphene material has an average number of layers from 1 to 200, more preferably from 1 to 60 and even more preferably from 1 to 10.

3. The method according to claim 1 or 2, wherein the graphene and/or graphene material is present in the polymeric material in an amount of from 0.01% to 70% by weight, preferably from 0.05% to 60% by weight and even more preferably from 0.1% to 25% by weight based on the total weight of the polymeric material.

4. The method according to any one of claims 1 to 3, wherein the graphene and/or graphene material is selected from graphene oxide, few layers of graphene oxide, multilayer graphene oxide, reduced graphene oxide, few layers of reduced graphene oxide, multilayer reduced graphene oxide, reduced graphite oxide, functionalized graphene oxide, few layers of functionalized graphene oxide, functionalized multilayer graphene oxide, functionalized graphite oxide, functionalized reduced graphene oxide, few layers of functionalized graphene oxide, functionalized reduced graphene oxide, functionalized reduced graphite oxide, pristine or almost-pristine graphene, few layers of pristine or almost-pristine graphene, pristine or almost pristine multilayer graphene.

5. The method according to any one of claims 1 to 4, wherein other than the graphene and/or a graphene material the polymeric material further comprises a flame retardant, said flame retardant being preferably selected from halogenated compounds, antimony oxides, red phosphorus, inorganic hydroxides, boehmite, Al(OH)₃, Mg(OH)₂, metal double hydroxides, organic and inorganic phosphates, phosphonates, phosphinates and polyphosphates, such as ammonium polyphosphate, triethylphosphate, tributoxyethylphosphate, ammonium diphosphate, NH₄H₂PO₄, triphenylphosphate, tris-2-ethylhexylphosphate, urea phosphate, aluminium phosphinate, aluminium diethylphosphinate; melamine, melamine derivatives such as melamine phosphate, melamine polyphosphate, melamine cyanurate; diacyandiamide, sulphates and sulphonates such as ammonium sulphate, H(NH₄)SO₄, melamine methanesulfonate, ammonium thiosulphate; piperazine derivatives such as piperazine phosphate, piperazine diphosphate, piperazine polyphosphate; nano-clays, TiO₂, TiO₂ nanoparticles, ZnO, ZnO nanoparticles, zinc borate, zinc phosphate, silica nanoparticles, carbon nanotubes (CNTs), graphite, and expandable graphite and silsesquioxanes. or mixtures thereof, optionally said flame retardant is encapsulated.

6. The method according to claim 5 wherein said flame retardant is selected from triethylphosphate, Mg(OH)₂, ammonium polyphosphate, ammonium sulphate, piperazine phosphate, Al(OH)₃, NH₄H₂PO₄, tributoxyethylphosphate, melamine polyphosphate, melamine cyanurate, antimony oxide and encapsulated ammonium sulphate.

7. The method according to claim 5 or 6, wherein the weight ratio of graphene and/or the graphene material with respect to the flame retardant is from 1:400 to 2:3.

8. The method according to any one of claims 1 to 7, wherein the polymeric material comprises a polymer selected from polyolefins of any type such as polyethylene, polypropylene and polybutylene; copolymers of olefins with different monomers such as ethylene vinyl acetate (EVA) copolymers; copolymers of olefins with acrylates or methacrylates such as ethylene-butyl methacrylate; polystyrenes such as high-impact polystyrene (HIPS); vinyl polymers such as polyvinyl chloride (PVC); polyethylene terephthalate (PET); polymethacrylates; polyacrylates; polyamides; polylactide (PLA); polyvinylidene difluoride (PVDF); polytetrafluoroethylene (PTFE, Teflon); polycarbonates; acrylonitrile butadiene styrene (ABS), acrylonitrile butadiene styrene /polycarbonate (ABS-PC); polyether ketone ketone (PEKK), polyether ether ketone (PEEK); polyphenylene sulfide (PPS); polyurethanes; chloroprene rubber, natural rubber (NR); polyisoprene; styrene-butadiene rubber (SBR), acrylonitrile butadiene rubber (NBR), hydrogenated acrylonitrilo-butadiene rubber (HNBR), carboxylated acrylonitrile-butadiene rubber (XNBR), ethylene-propylene-diene rubber (EPDM) the diene preferably being norbornadiene; dicyclopentadiene; 1,4-hexadiene; piperylene or 5-ethylidene-2-norbornene; polybutadiene, polybutylene; polystyrene butadiene styrene (SBS), ethylene polystyrene butadiene styrene (SEBS); block copolymer elastomers consisting of two or more hard segments of a polyester or a polyamide and two or more soft segments of polyester or polyether such as PEBAX or Hytrel; silicone elastomer; thermoplastic elastomeric polyurethanes; thermoplastic elastomeric polyureas; acrylic rubbers (ACM), fluorinated rubbers (FKM); epichlorohydrin rubbers (ECO); polysulfide rubbers such as Thiokol; ionomers; latex; epoxy resins; polyester resins; unsaturated polyester resins; epoxy vinyl ester; polyamide-imide; polyester-imide; gel coats such as unsaturated polyester gel coats, acrylic gel coats or polyurethane gel coats; polyurethane resins; polyurea resins; urea-formaldehyde; melamine-formaldehyde; phenol-formaldehyde; acrylic resins; and mixtures thereof.

9. The method according to claim 8, wherein said polymer is selected from polyamide, polypropylene, polyurethane resins, acrylonitrile butadiene rubber (NBR), epoxy resins, unsaturated polyester resins, polyethylene, polystyrene, acrylonitrile butadiene styrene (ABS), ethylene vinyl acetate (EVA), polyvinyl chloride (PVC), styrene-butadiene rubber (SBR).

10. The method according to any one of claims 1 to 8, wherein the polymeric material is in the form of a paint; a coating such as a coating on a metal, in particular on a metal structure; an adhesive; electrical and electronic component such as a cables; an automotive component; an aerospace component; a material for the building industry; a textile; or a composite with wood, paper and/or textiles.

11. The method according to any one of claims 1 to 10, wherein the variation on the electrical resistance or impedance of the polymeric material is of at least 5 %.

12. Use of graphene and/or a graphene material in a polymeric material for the detection of fire or a heat source, for monitoring the fire resistance of the polymeric material and/or for monitoring the effects of fire and/or heat in the mechanical and/or structural properties of the polymeric material or a substrate coated by the polymeric material, wherein the use is preferably in a method as defined in any one of claims 1-11.

13. An additive for improving the fire resistance of a polymeric material, for the detection of fire or a heat source using a polymeric material, for monitoring the fire resistance of a polymeric material and/or for monitoring the effects of fire and/or heat in the mechanical and/or structural properties of a polymeric material or a substrate coated by the polymeric material, wherein said additive comprises a combination of a
i) graphene and/or a graphene material and
ii) a flame retardant,
wherein i) preferably is as defined for the method of claim 2 or 4, ii) preferably is as defined for the method of claim 5 or 6, and the ratio of i) to ii) preferably is as defined for the method of claim 7.

14. A polymeric material comprising a polymer and an additive according to claim 13, wherein the polymer preferably is as defined for the method claim 8 or 9.
